(19) Europäisches Patentamt
European Patent Office
Office européen des brevets

(11) **EP 2 071 181 A1**

(12) **EUROPEAN PATENT APPLICATION**
published in accordance with Art. 153(4) EPC

(43) Date of publication:
**17.06.2009 Bulletin 2009/25**

(51) Int Cl.:
***F03B 13/18*** *(2006.01)*

(21) Application number: **07834485.0**

(22) Date of filing: **04.09.2007**

(86) International application number:
**PCT/MX2007/000104**

(87) International publication number:
**WO 2008/030077 (13.03.2008 Gazette 2008/11)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.09.2006 MX PA06/00997**

(71) Applicant: **Power Retailing Group, S.A. De C.V. C.P. 11810, Mexico D.F. (MX)**

(72) Inventor: **REGO GARCIA DE ALBA, Luis Felipe CP 01210, Mexico D.F. (MX)**

(74) Representative: **Caldwell, Judith Margaret Keltie Fleet Place House 2 Fleet Place London EC4M 7ET (GB)**

(54) **WAVE PUMP USED TO CONVERT WAVE ENERGY INTO ANOTHER TYPE OF USABLE ENERGY**

(57) The present invention relates to the energy transformation industry, and more specifically to the device manufacturing industry for the transformation of natural alternative energies into more controllable and relatively easy to store energy. The advantages of the present equipment with respect of those of the prior art relies on that the present is of long useful life, which can extract from the waves energy that can be stored to be used at the time it is needed and with the capacity of being controlled in its application. Structurally the equipment of the present invention is **characterized by** comprising a float having an orifice in the center, in this orifice it is disposed firmly fastened a rigid pipe hydraulically connected at one of its ends to a hose, and at the other end to a check valve in the end immersed in the water bed; the opposite end of the hose wich is hydraulically joined to the rigid pipe, the hose ends in a water tank on dry land and above the sea level average.

FIG. 2

**Description**

**FIELD OF THE INVENTION**

The present invention relates to the energy transformation industry, and more specifically to the of non-pollutant device manufacturing industry for the transformation of natural alternative energies into more controllable and relatively easy to store energy.

**BACKGROUND OF THE INVENTION**

It is undeniable, with certain doubts over the nuclear energy, that the conjunt of energy sources in the planet Earth, directly or indirectly, comes from the solar energy. If we think about the eolic energy, for example, this is due to the convection air currents due to the temperature gradients formed by the different form in which the sun warms different points in the planet.

One of the problems of this type of energy, that is, of the alternative energies, is the difficulty to control them, their erratic behavior, appearing in a very high level at some moments and at others in a non-existent way.

One of the energy sources that is erratic, but only in its magnitude, since it is constantly present, is the sea waves. The wind energy is transmitted to the sea (enviroment alteration) through its tangential component causing deformations or waves, which transport part of that energy towards the coasts, that is, that in each point by which the associated sea waves are passing, associated to this one there are some energy, pressure and gravitational forces which inlfuence all the vertical profile affecting the profile up to ½ of L (wavelength of the wave in the point) for deep waters and in the sea bed in case of shallow waters.

The energy that these waves transport is of a high magnitude and the people who have been in contact with these displacements of marine water can so corroborate. This has attracted the attention of those people interested in new energy sources and this has generated more than 2000 processes and about 200 devices trying to extract energy from the energy contained in the waves, but only 2 or 3 patents may achieve their objective in a viable way.

Most of the creations on the matter has the drawback that try to conduct all the operation in the water and as we already said, the sea has a lot of energy and to be able to extract the same it is required simpler devices which allow to support this energy without destroying them.

Besides the energy magnitude, this is manifested with variable direction vectors, erratic frequency, and it is chemically aggressive (corrosion), and it appears with magnitudes that can exceed any economically viable resistance.

A very small sample of these inventions, can be seen in patent documents US 5.808.368 and EP 0.664.855 Bl.

In US patent 5.808.368 it is claimed and disclosed a mechanism which extracts only the wave energy without extracting any matter. By a float relative movement with regard to an anchorage block, a swing movement is caused in a cable joined in one of its ends to the anchorage block and in the opposite end, out of the water, on dry land, to another counterweight block, with a mechanism of intermediate foresail which transforms the swing movement into a circular movement that can be used to provide movement to a water pump or to a electric energy generator.

This mechanism presents several disadvantages, one of them, for example, is that the energy obtained from the waves has to be used immediately, otherwise this energy is lost, because it can not be stored. Another example of disadvantage is that this energy is proportional to the energy contained in the wave at any given time and it is not possible to control said energy. Understanding for control, to initiate, to continue and to stop at the desired time.

In the patent document EP 0.664.855 B1 it is disclosed a mechanism that when is anchored firmly in the sea bed, by means of a valve combination, can act as a bomb or as a electric energy generator.

This mechanism has as principal disadvantage to need to be anchored firmly at the bottom of the marine bed, which means high installation costs and with the sea behavior, a very short useful life.

For all the above mentioned, a mechanism diminishing to the maximum the disadvantages already pointed out previously for the mechanisms of the prior art and which rule for most of them, would mean a technological advance in this area. The obtention of any energy from a natural and ecologically healthy energy, would mean a financially healthy corporation and a corporation that would have important competitive advantages over traditional technologies corporations.

**OBJECTS OF THE INVENTION**

The principal object of the present invention is to make possible an efficient mechanism of extraction of the sea waves energy, with qualities of long useful life.

Other object is to make possible said mechanism with the possibility of obtaining an energy which can be stored for its use at the time it is needed.

Still another object is to achieve in this mechanism the possibility of transforming the sea waves energy into an energy that can be controlled in its application.

Other objects and advantages of the present invention will be evident from the study of the following description and the drawings accompanied exclusively for illustrative and not limitative purposes.

## SUMARY OF THE INVENTION

Briefly, the present invention consists of a mechanism to transform the energy of a wave into another type of usable energy, being in this case the usable energy the potential energy implicit in certain quantity of water located in a certain height, analogously to the potential energy in a dam reservoir.

The principal function of this device is to pump water to a elevated tank, using the own sea wave energy.

Having already sea water in the elevated tank, it si counted on potential stored energy feasible of being transformed into kinetic controlled energy. This one is the principal advantage of this type of systems, the capacity to store the energy and only use it at the time you need it. To open and to close a by-pass valve.

For that purpose the mechanism consists of two principal elements. A buoy with a check valve in the center, an element wich hydraulically connects the check valve with a distant deposit on dry land, where the sea waves impelled water is leaded through the valve and is transported by the element hydraulically connecting this valve with the deposit.

The pumping mechanism can be explained saying that when the wave acts over the buoy causes vertical displacements* (up and down of which limit is the acting wave height), so that by rising the same departing from the trough with the wave up to the crest, water particles displacements are induced downwards causing a pressure difference (gradient) or vaccum in the rigid pipe (in the space occuping the water level and the check valve) and by continuing this way with this cyclical wave movement departing now from the crest (downwards buoy), the displacement senses or particle speeds are inverted until arriving to the node or trough, creating thereby an upwards flow with particle speeds exceeding the check valve resistance reaching in this way the constant pumping with the mass acceleration and limitations marked below.

*The horizontal displacements are not considered since the buoy will be anchored limiting these to the maximum to make it more efficient.

Other way of explaining, is by saying that the process is based on the sea movement in vertical way. The system consists of two principal elements* a buoy or float and a hose having in the tip has a "check" valve. The float has sticked in the center the hose and at the time of the wave movement it takes place the vertically up and down, this causes that the hose with the valve in the top absorbs water and the pumping process starts. Likewise the float displacement volume (equal to the buoy weight or mass) will be directly related to the pumping force, that is, to more mass a major element inertia has to be overcome in order that it comes to rest (since it goes from a constant movement state to the rest, in the path towards crests and troughs) and this sea waves movement generates a vertical force wich induces the water particles movement directed directly to the input by lowering the bouy for the body inercia effect (mass). Besides the principal factor influentiating in the pumping force that is the pressure gradient above mentioned (wave energy). So, both phenomena make possible to break the load caused by the water column weight that it is being formed and finally to certain height this will be constant for every specific project and the whole set (buoy - water column), will form a sole system.

For better understanding the characteristics of the invention, the drawings with illustrative character but not limitative accompany the present description, as integral part of the same, which is described below.

## BRIEF DESCRIPTION OF THE DRAWINGS

Figure 1 shows a schematic illustration of an equipment part for the energy extraction of the sea waves, for explaining the pumping mechanism.

Figure 2 illustrates a complete scheme of the equipment indicated in the previous figure with the buoy in a given position.

Figure 3 illustrates a complete scheme of the equipment indicated in the previous figure with the buoy in a lower position than the position in figure 2.

Figure 4 illustrates the buoy in a conventional perspective, showing the central orifice where the check valve will be installed.

Figure 5 illustrates a check valve scheme in the opened position.

Figure 6 illustrates a check valve scheme in its closed position.

For a better understanding of the invention, the detailed description of any of the embodiments of the same will be given, showed in the drawings with illustrative but not limitative purposes are annexed to the present description.

## DETAILED DESCRIPTION OF THE INVENTION

The characteristic details of this new equipment to extract sea waves energy will be shown with the detailed description of the embodiment illustrated in the attached drawings, indicating the same parts with the same reference signs to indicate the same.

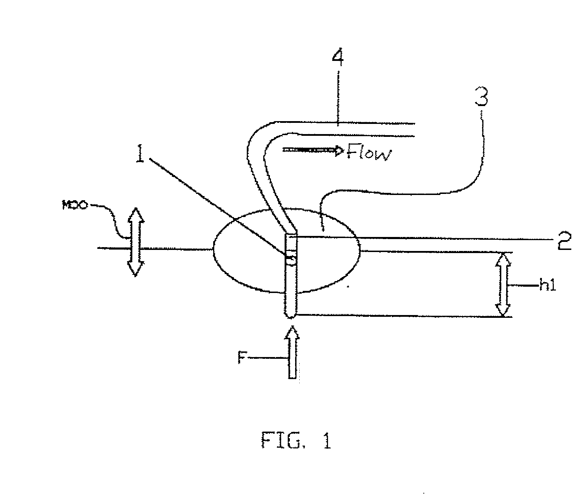

Figure 1 shows a schematic illustration of an equipment part for the energy extraction of the sea waves, for explaining the pumping mechanism.

When the wave acts over the buoy 1 causes vertical displacements* MOO (upwards and downwards of which limit is the height h1 of the acting wave), so that when this one is rising from the trough, with the wave up to the crest, water particle displacements are induced downwards causing a pressure difference (gradient) or vaccum in the rigid pipe 2 (in the space occupied by the water level and the check valve 3) and by continuing this way with this cyclical wave movement departing now from the crest (downwards buoy), the displacement senses or particle speeds are inverted until arriving to the node or trough, creating thereby a flow upwards with particle speeds exceeding the check valve resistance reaching in this way the constant pumping with the mass acceleration and limitations marked below.

*The horizontal displacements are not considered since the buoy will be anchored limiting to the maximum the same to make it more efficient.

In other words, at the time the sea waves come, makes the float to rise and when it lowers the check valve absorbs the water quantity that it can contain and at the time of rising again it is closed by gravity and by the direct weight of the absorbed water.

An observation of the particles behavior in the aqueous enviroment with respect to its speeds and local accelerations according to their position (phase angle), allows to see that when raising to the crest the particles speeds are negative, that is, the speed vector points out downwards and when it is going downtowards the trough, the speed is positive and the vector points out upwards with regard to a reference level located in the average sea level.

Departing from the General Equation F=PxA we have in our system that it necessary to comply generally the following inequality in order to produce the pumping, namely:

$$F = P_{wave} x A_1 + A_1 (P_a) + (A_1) pgh_1) > Mg + P_a X A_2;$$

*The bouy mass is not considered in the inequality since it represents the minimal condition for the pumping.

Where the first factor is the dynamic component originated by the sea waves (only responsible for providing energy for the pumping, this without considering the float mass) and the following, is the system hydrostatic part, understanding that the inequality indicates that all the factors have to be greater than the water column weight plus the influence of the atmospheric pressure over the flexible pipe.

F = Force acting on the rigid pipe input.

$A_1$ = Input area (rigid pipe).

$A_2$ - Flexible pipe area.

g = Gravity acceleration.

p = Sea water specific weight.

$h_1$ = Input height up to the average sea level.

M = Water column mass.

$P_a$ = Atmospheric pressure.

$P_{wave}$ = Wave dynamic pressure.

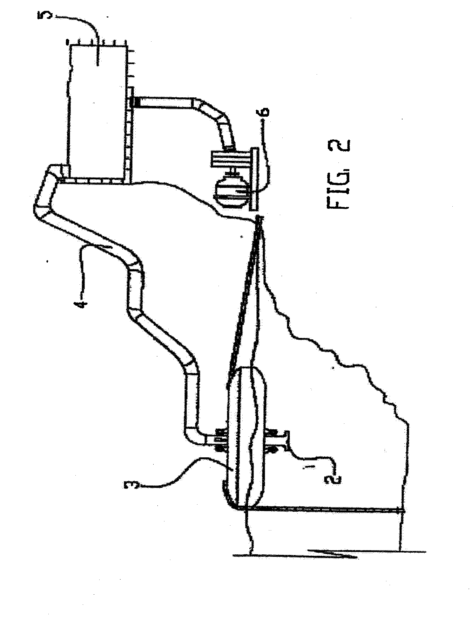

Figure 2 illustrates a complete scheme of the equipment indicated in the previous figure with buoy 3 in a given position. This buoy 3, in its decrease after passing by the wave crest, by descending makes that water come in the rigid pipe 2, raising the height such that the water column remains balanced with the wave force, which as already mentioned, changes according to the depth it is. When the wave stops acting, the introduced water will try to return but will be impeded by the sealing the check valve, not visibly in this perspective. In this way, with every new wave it will be introducing water firstly in the rigid pipe 2 and later in the flexible pipe 4, until the water reach the deposit 5, where it will be stored as potential energy that will depend on the height and the water quantity, achieving to transform in this way the sea waves dynamic energy into potential controllable energy.

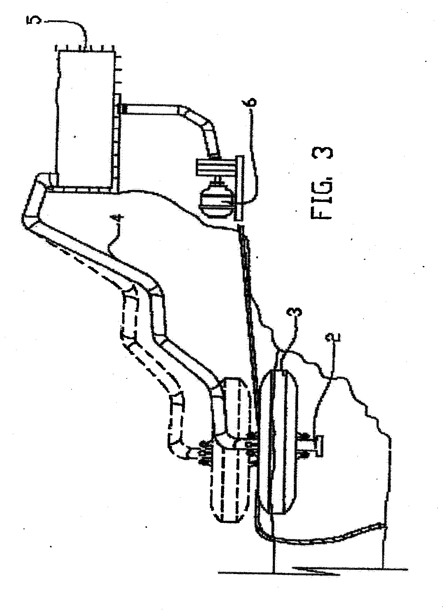

Figure 3 illustrates a complete scheme of the equipment indicated in the previous figure with the buoy in a lower position than the position that it had in the figure 2. In this figure appear the same elements already described in the figure 1, but in another position.

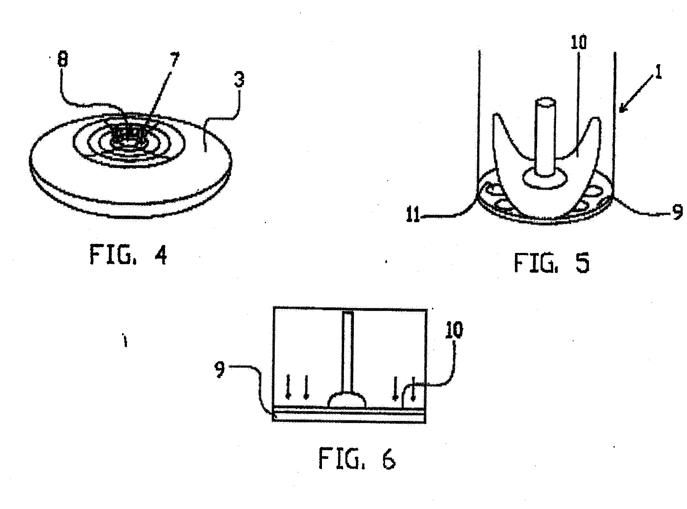

Figure 4 illustrates the buoy 3 in a conventional perspective, showing the central orifice 8 where the check valve will be installed, not illustrated. In this figure the detail of the wheelbarrow 7 is illustrated wich will facilitate the bouy transport in dry land. Being this a buoy, it is clear that it will have a lower density than that of the water, but with an important resistance to the efforts that may appear for its own weight and its movement in the water. An example of these materials might be composed by metallic structure and covered of foamed material.

Figure 5 illustrates a check valve scheme in the open position. During the definition of the invention different designs of valves were proved, the most having as drawback that if deteriorating in its functioning or in its body due to the characteristics of the sea water and because of the land, dirts or sand that drags the own wave. A design wich overcome the disadvantages is the one shown in this figure where the seat valve 9 can be seen with the orifices through which the wave water passes. The flexible disk 10 is the one wich seals against the seat 9, plugging the orifices 11, when the water tends to go down.

Figure 6 illustrates a check valve scheme in its closed position, with the disc 10 seated in the valve seat, in its position of obturation of the orifices not seen in this position.

The set of elements mentioned in the present description, cooperate to carry out the function to pump water from the sea to a distant and high deposit, using for that purpose the energy contained in the sea waves.

The advantages of this equipment with respect to those of the prior art are simpleness, efficiency, simplicity, economy, and the principal disadvantage of the current processes is that they depend on factors related to the frequency and elevation of the waves to be able to generate electricity and the one ours is changeable, that is, we can pump a liter or six and it does not affect us, because of the performance is mesured in the average of pumping in one day.

The invention has been sufficiently described so that an average skill person in the matter can reproduce and obtain the results that we mention in the present invention. Nevertheless, any skill person in the field of the technology that compete the present invention can be capable of makinging modifications not described in the present application, nevertheless, if for the application of these modifications in a certain structure or in the process of manufacture of the same, it is needed the matter claimed in the following claims, the above mentioned structures will have to be understood within the scope of the invention.

Having sufficiently described the invention, it is considered as novel and therefore it is claimed as property the expressed and contained in the following claims.

**Claims**

1. Equipment to transform the wave energy into another type of usable energy, **characterized in that** includes a float having an orifice in the center, in this orifice is disposed a rigid pipe firmly fasted hydraulically connected at one of its ends to a hose, and at the other to a check valve in the end immersed in the water bed; the opposite end of the hose wich is joined hydraulically to the rigid pipe, the hose ends in a water tank on dry land and above the sea level average.

2. Equipment to transform the wave energy into another type of usable energy, according to the previous claim, **characterized in that** said float, also named buoy, is hold to the shore and/or to the sea bed for other applications sea inside, achieving in this way to minimize the system degrees of freedom and with this the horizontal displacements.

3. Equipment to transform the wave energy into another type of usable energy, according to claims 1 or 2, **characterized in that** said float, also named buoy, is manufactured with a metallic structure covered with plastic foam.

4. Equipment to transform the wave energy into another type of usable energy, according to any of the claims 1 to 3, **characterized in that** the check valve is a valve comprising a drilled valve seat and a plastic or metallic flexible disk with the capacity to seal against the seat, plugging its orifices and allowing the water flow only towards the deposit and impeding that this one returns to the sea.

FIG. 1

FIG. 2

FIG. 3

FIG. 4

FIG. 5

FIG. 6

WO 2008/030077

PCT/MX2007/000104

2/4

FIG. 2

EP 2 071 181 A1

PCT/MX2007/000104

FIG. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5808368 A

- EP 0664855 B1